# EUROPEAN PATENT APPLICATION

(11) **EP 2 284 685 A2**
(43) Date of publication of application: **16.02.2011**
(21) Application number: 10166953.9
(22) Date of filing: 23.06.2010
(51) Int. Cl.: G06F 3/12

(54) **Remote management and network access control of printing devices within secure networks**

(30) Priority: 29.07.2009 US 511257
(71) Applicant: Ricoh Company, Ltd., Tokyo 143-8555 (JP)
(72) Inventor: Woo, James, Cupertino, CA 95014 (US)
(74) Representative: Schwabe - Sandmair - Marx

(57) **Abstract**

Systems and methods are disclosed for enabling remote management of printing devices and for providing access control of printing devices within secure health policy based networks. A printing device (102) transmits device status information to a status server (104) and operational health information to a compliance server (106). The compliance server receives a health policy for the network from the status server. The compliance server evaluates the operational health information using the health policy and configures the printing device for operations within a secure portion of the network if the operational health information is in compliance with the health policy.

## Description

### BACKGROUND

### 1. Field of the Invention

The invention relates generally to providing remote management and access control of printing devices within secure networks, and more specifically, within secure networks utilizing health policy compliance requirements for entry.

### 2. Discussion of Related Art

In a printing environment, various devices are available to a user for printing and other related services, such as faxing, copying, scanning, etc. One such a device is a multi-function printer (MFP). As a printer, a user may generate and transmit print jobs to the MFP specifically for printing the print job. MFPs may also perform other functions, such as copying documents, scanning documents, and sending/receiving facsimile documents to and from a computer operated by the user.

A number of connection options exist when utilizing an MFP. For example, the MFP may be part of a local network, such as an Ethernet network, or directly connected to a client computer (e.g., using Universal Serial Bus, Parallel, or Serial connections). In a network environment, the MFP utilizes a local network address such that client computers can send data to and receive data from the MFP. Because the MFP both initiates communication with a client computer and responds to communications initiated by a client computer, a desirable connection topology for the MFP would support communications initiated by the client computer (e.g., sending a print job to the MFP) and communications initiated by the MFP (e.g., receiving facsimiles or scanned documents from the MFP).

Because a local network utilizing an MFP may include multiple users, it may be desirable to perform a number of management functions for the MFP. For example, the MFP may collect information about the number and types of print jobs, facsimiles or documents scanned, information about the amount of toner or ink remaining for printing, errors generated at the MFP (e.g., jammed pages), etc. Such collected information may be viewed in a web browser on a client computer by directly logging into a web server executing internally within the MFP.

Difficulties can arise when a large number of MFPs require management. In such cases, it may be problematic for an administrator of the MFPs to systematically log into and recover management information from the MFPs on a device by device basis. One solution is to utilize remote management servers in communication with the MFPs. In this regard, the MFPs may be configured to relinquish control to a remote management server. Each MFP in a network may communicate with the remote management server to record and store information, such as page counts, remaining toner and/or ink, and error conditions. Thus, instead of directly logging into each MFP, an administrator may access the remote management server to view information about all the MFPs that are in communication with the remote management server.

With the increasing prevalence of mobile computers entering and leaving local networks, network administrators face an ongoing challenge to provide security within the local network. For example, a vendor may bring a portable computer into a local network and be granted access to the network for printing, file sharing, internet access, etc. In most cases, however, the portable computer is not directly under management by the administrator of the local network. In this regard, the portable computer may not have the latest security features installed for the operating system, current anti-virus definition files, specific firewall settings, or other security features that are desired or recommended by the network administrator. Under such conditions, the portable computer may pose a security threat to the local network.

One option to increase security in these situations is to use segregated secure and non-secure networks based on the health or status of the computer entering the network. For example, the portable computer may be required to present health information to the network detailing current security information, such as an operating system version number, an anti-virus definition file, a date of a last virus scan, etc. Based on the health information presented, the portable computer may be allowed access to the secure portion of the network or instead be relegated to a non-secure portion of the network for remediation of the security issues. During remediation, a computer within the non-secure network generally has limited or no access to the secure portion of the network, thus protecting computers within the secure portion of the network from a potential security threat. After remediation, the portable computer may again present health information and request access to the secure network. If the health information meets the requirements of the health policy of the secure network, then the portable computer is configured to access the secure network.

One example of such a secure network system includes the Microsoft Network Access Protection (NAP) system. In an NAP system, a network policy server (NPS) receives the health information from a computer requesting access to the secure portion of the network. The NPS may then compare the health information of the computer to a health policy of the network. The health policy of the network, which is typically managed by the network administrator, specifies the requirements that the health information of the computer may be required to meet for accessing the secure portion of the network. Computers which fail the health policy check are confined to a non-secure portion of the network with limited or no connectivity to the secure portion of the network.

Because an NAP environment is computer centric, other devices such as MFPs may be confined to non-secure (i.e., restricted) portions of the network. Because devices in restricted portions of the network are limited or prevented from communicating with computers within the secure portions of the network, various features of MFPs may be unavailable for use by secure clients (e.g., scanning documents, receiving facsimiles, etc.). In addition to these limitations, remote management of MFPs within the restricted portion of the network may be unavailable. For example, the remote management server may reside within the secure portion of the network, rendering the remote management server unavailable to the MFP until the MFP is granted access to the secure portion of the network.

In an NAP system, some work-α-rounds are available to the network administrator. One such work-α-round includes using exception lists for communication between non-compliant devices in the restricted portion of the network and computers within the secure portion of the network. Exception lists operate to bypass the health policy checks performed by the NPS to allow non-compliant devices access to the secure portion of the network. Such work-a-rounds are not without risk, however, because the exceptions introduce opportunities for security breaches. For example, a virus on the Internet may target a non-compliant device for infection, which may then in turn have unrestricted access to the secure portion of the network via the exception list. Additionally, an intruder may mimic the exception list for the non-compliant device (e.g., via a Media Access Control address) to gain access to the secure portion of the network.

### SUMMARY

The present invention solves the above and other problems, thereby advancing the state of the useful arts, by providing systems and methods for providing remote management services and access control of MFPs in secure health policy based networks.

One aspect hereof provides a method of configuring a printing device to operate within a secure network, where the secure network includes a compliance server. According to the method, device status information of the printing device is transmitted to a status server. A health policy is transmitted from the status server to the compliance server, where the health policy includes criteria for determining whether to include the printing device for operation within the secure network. Additionally, according to the method, operational health information of the printing device is transmitted to the compliance server. The operational health information is evaluated to determine compliance with the health policy of the network. If the operational health information is in compliance, the printing device is configured to operate within the secure network.

Another aspect hereof provides a printing system operable within a secure network. The printing system includes a printing device, a status server and a compliance server. The status server is communicatively coupled with the printing device and operable to receive device status information from the printing device and to transmit a health policy to the compliance server. The compliance server is communicatively coupled with the printing device and the status device and is operable to evaluate operational health information for the printing device based on a health policy for the network. The health policy includes criteria for determining whether to include the printing device for operation within the secure network. The printing device is operable to transmit the device status information of the printing device to the status server and further operable to transmit the operational health information of the printing device to the compliance server. The compliance server is further operable to evaluate the operational health information of the printing device for compliance with the health policy and to configure the printing device to operate within the secure network if the operational health information is in compliance.

### BRIEF DESCRIPTION OF THE DRAWINGS

The same reference number represents the same element or same type of element on all drawings.
FIG. 1 is a block diagram of an exemplary printing and remote management system for enabling remote management of printing devices and for providing access control of printing devices within secure health policy based networks.
FIG. 2 is a flowchart depicting an exemplary method for providing access control of printing devices within secure health policy based networks.
FIG. 3 is a flowchart depicting an exemplary method for providing remote management of printing devices within secure health policy based networks.

### DETAILED DESCRIPTION OF THE DRAWINGS

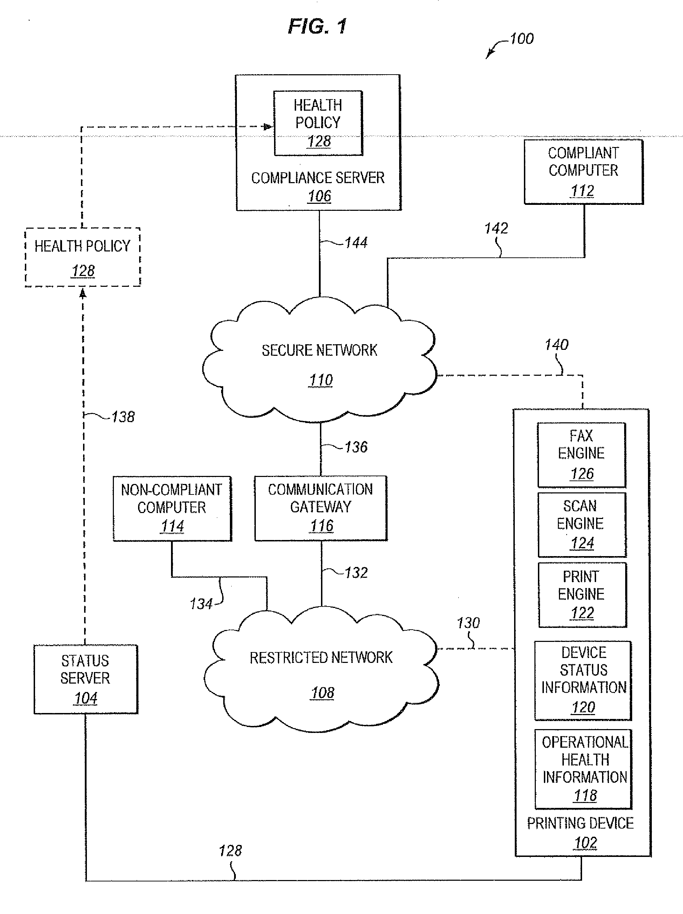

FIGS. 1 through 3 and the following description depict specific exemplary embodiments of the present invention to teach those skilled in the art how to make and use the invention. For the purpose of this teaching, some conventional aspects of the invention have been simplified or omitted. Those skilled in the art will appreciate variations from these embodiments that fall within the scope of the present invention. Those skilled in the art will appreciate that the features described below can be combined in various ways to form multiple variations of the present invention. As a result, the invention is not limited to the specific embodiments described below, but only by the claims and their equivalents.

FIG. 1 is a block diagram of an exemplary printing and remote management system 100 for enabling remote management of printing devices and for providing access control of printing devices within secure health policy based networks. The printing and remote management system 100 includes a compliance server 106, a printing device 102, and a status server 104. The printing device 102 is either coupled to a secure network 110 using signal path 140 or coupled to a restricted network 108 using signal path 130. In FIG. 1, any device or computer within the secure network 110 is granted access to any device either within the secure network 110 or within the restricted network 108. For example, FIG. 1 also illustrates a compliant computer 112 coupled to the secure network 110 using signal path 142. Because the compliant computer 112 is coupled with the secure network 110, the compliant computer 112 is granted access to any device connected to the secure network 110 and possibly any devices connected to the restricted network 108. Thus, the compliant computer 112 may communicate in an unrestricted manner with the printing device 102.

FIG. 1 also illustrates anon-compliant computer 114. The non-compliant computer 114 is coupled to the restricted network 108 using signal path 134. In FIG. 1, any device within the restricted network 108 is generally granted access to any device or computer within the restricted network 108. However, limited access is granted for devices coupled to the restricted network 108 which attempt communication with devices coupled to the secure network 110.

A communication gateway 116 in FIG. 1 illustrates one possible coupling between the secure network 110 and the restricted network 108. The communication gateway 116 may operate to limit or prevent communications between the restricted network 108 and the secure network 110. In FIG. 1, the communication gateway is coupled to the secure network 110 along a signal path 136. The communication gateway 116 is also coupled with the restricted network 108 along a signal path 132. Thus, communications between the non-compliant computer 114 and the compliant computer 112 crosses the communication gateway 116. In this regard, the communication gateway may block or limit any communication attempts originating at the non-compliant computer 114 with a destination for the compliant computer 112 coupled to the secure network 110.

In FIG. 1, devices are either coupled to (i.e., assigned) to the restricted network 108 or the secure network 110 based on a compliance with network health policies. The network health policies define the requirements for granting a device access to the secure network 110. The requirements for entry may include health related information which may compromise the security of the secure network 110. For example, the non-compliant computer 114 may be assigned to the restricted network 108 due to out of date virus protection software. The non-compliant computer 114 may then remain assigned to the restricted network 108 until the out of date virus protection software is corrected.

In the printing and remote management system 100, the compliance server 106 is coupled to the secure network 110 using signal path 144. The compliance server uses one or more network health policies to evaluate device requests for accessing the secure network 110. Thus, when a device requests access, the device transmits the health related information to the compliance server 106. The compliance server 106 then compares the health related information of the requesting device to the network health policies for granting access to the secure network 110. In some cases, the compliance server 106 may use different network health policies for different devices. In FIG. 1, health policy 128 is provided by the status server 104 specifically for evaluating the health related information for the printing device 102.

During a request for accessing the secure network 110, for example, the compliant computer 112 transmits its health related information to the compliance server 106. After the compliance server 106 receives the health related information, the compliance server 106 compares the health related information to the network health policies. If the health related information is compliant with the network health policy, the compliance server 106 grants the compliant computer 112 access to the secure network 110 is granted. If the operational health information is not compliant with the network health policy, the compliance server 106 denies the compliant computer 112 access to the secure network 110. Instead, the compliance server 106 may assign the non-compliant device to the restricted network 108 for remediation. Thus, the health policy check ensures that devices that are granted access to the secure network 110 do not pose a security risk to the secure network 110.

In some cases, devices assigned to the restricted network 108 may undergo a process of remediation. In remediation, the devices may contact special servers assigned to the restricted network 108 to provide updates or instructions to render the devices compliant for accessing the secure network 110. After remediation, a device may again request access to the secure network 110. During the request process, new operational health information is submitted to the compliance server 106 for evaluation. Access to the secure network 110 is granted when the new operational health information is in compliance with the health policy corresponding to the device.

In the printing and remote management system 100, the printing device 102 transmits operational health information 118 to the compliance server 106 for evaluation. In order to utilize a network health policy specific to the printing device 102, the status server may transmit health policy 128 to the compliance server 106. The compliance server 106 may then utilize the health policy 128 to evaluate the operational health information 118 of the printing device 102. In some cases, the printing device 102 may not be compliant with the health policy 128. When not in compliance, the compliance server 106 assigns the printing device 102 to the restricted network 108. In this case, the status server 104 may act as a remediation server for the printing device 102. When in remediation, the printing device 102 may communicate with the status server 104 over a signal path 128 to receive specific instructions or software to bring the operational health information 118 into compliance with the health policy 128.

When the printing device 102 is assigned to the restricted network, various services operating on the printing device 102 may not operate correctly. For example, the printing device 102 may include, in some embodiments, a scan engine 124. The scan engine 124 operates to scan printed documents into an electronic format. Once the printed document is in the electronic format, it may be forwarded to another device on either the secure network 110 or the restricted network 108. When the printing device 102 is assigned to the restricted network 108, the communication gateway 116 may block the printing device 102 from transmitting the electronic document to a device in the secure network 110, such as the compliant computer 112. When the electronic document is blocked, a user of the compliant computer 112 may be prevented from utilizing the scan engine 124.

In another embodiment, the printing device 102 may include a fax engine 126. The fax engine 126 operates to receive and send facsimile transmissions to other facsimile enabled devices. When the printing device 102 is assigned to the restricted network 108, the communication gateway 116 may also block the printing device 102 from transmitting a received facsimile document to a device assigned to the secure network 110, such as the compliant computer 112. When the received facsimile is blocked from transmission, the user of the compliant computer 112 may be prevented from utilizing the fax engine 126.

The status server 102 also operates as a remote management device for the printing device 102. In this role, the status sever 104 receives information from one or more printing devices, such as printing device 102. After receiving the information, the status server 104 may provide status information to a network administrator. This type of centralized management allows the network administrator a single point of management for multiple printing devices, which reduces the complexity of managing the printing devices. Without the status server 104 operating in this management role, the network administrator may be required to log into each printing device individually to recover the information.

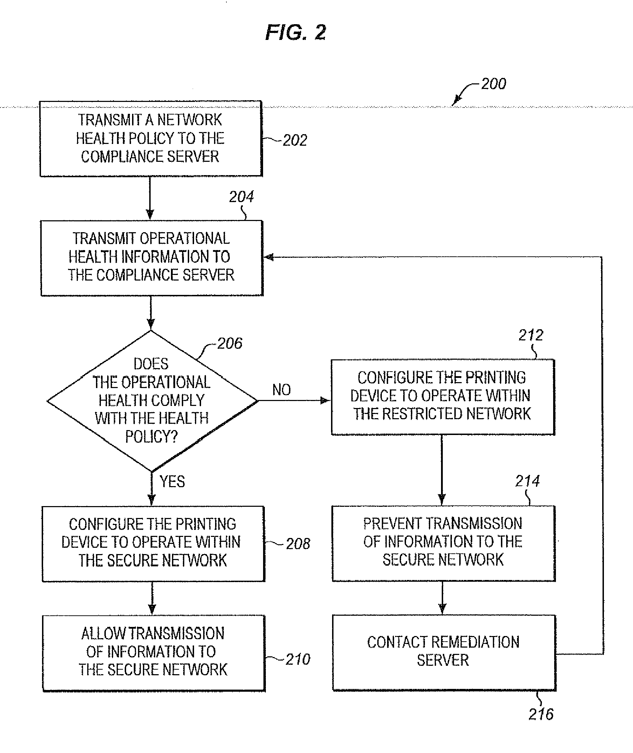

FIG. 2 is a flowchart depicting an exemplary method 200 for providing access control of printing devices within secure health policy based networks. The steps of FIG. 2 will be discussed with regard to the operation of the printing and remote management system 100 of FIG. 1. In some cases, the printing device 102 may already be assigned to the secure network 110. In this case, a determination is made as to whether the printing device 102 should continue accessing the secure network 110. In other cases, the printing device 102 is assigned to the restricted network 108. In this regard, a determination is made as to whether the printing device 102 is granted access to the secure network 110.

In step 202, the status server 104 transmits the health policy 128 to the compliance server 106. The health policy 128 indicates the criteria for granting access to the printing device 102 to the secure network 110. In some cases, the health policy 128 will be specific to the make and model of the printing device 102. The health policy 128 may include criteria such as an alarm condition, a security violation, whether the printing device 102 is in a maintenance mode, a firmware revision, an anti-virus software status, or whether the printing device 102 is busy performing an internal task.

In step 204, the printing device 102 transmits the operational health information 118 to the compliance server 106. The printing device 102 may, for example, run specific firmware or software to determine the operational health information 118. Also, the printing device 102 may read a number of internal sensors which indicate the paper status of various paper trays or cassettes, a toner or ink status, a maintenance door status, and the like. In some cases, the printing device 102 may also transmit a device discovery message to the status server 104. The device discovery message indicates to the status server 104 that the printing device 102 is present and may be available for remote management. In other cases, the compliance server 106 may transmit the device discovery message to the status server 104 on behalf of the printing device 102. The device discovery message may indicate to the status server 104 that the printing device may be available for remote management.

In step 206, the compliance server 106 determines if the operational heath information 118 complies with the health policy 128. In some cases, the compliance server 106 operates as a Microsoft Network Access Protection (NAP) health policy server. In this case, the compliance server 106 may receive an NAP statement of health from the printing device 102. If the compliance server 106 determines that the operational health information 118 is in compliance with the health policy 128, then step 210 is performed. If the compliance server 106 determines that the operational health information 118 is not in compliance with the health policy 128, then step 214 is performed.

In step 208, the printing device 102 is configured to operate within the secure network 110, For example, the compliance server 106 may assign a network address to the printing device 102 which resides within an address space of the secure network 110. In other cases, the compliance server 106 may issue a security certificate to the printing device 102 for use when communicating to devices assigned to the secure network 110. The compliant computer 112 may, for example, be configured to reject any communications from devices which do not present a valid security certificate when initiating communication with the compliant computer 112.

In step 210, transmission of information from the printing device 102 to devices assigned to the secure network 110 is allowed. For example, the printing device 102 may communicate directly with the compliant computer 112 to transmit a facsimile document from the fax engine 126 or an electronic document from the scan engine 122. In some cases, the status server 104 may be within the secure network 110. Because the printing device 102 may not be able to transmit device status information from the restricted network 108 to the secure network 110, transmitting the device status information in step 202 may occur after the printing device 102 is granted access to the secure network 110.

When the operational health information 118 does not comply with the health policy 128, the printing device may be assigned to the restricted network 108. In this case, step 212 comprises configuring the printing device 102 to operate within the restricted network 108. For example, the compliance server 106 may assign a network address to the printing device 102 which resides within an address space of the restricted network 108. Also, the compliance server 106 may not issue a security certificate to the printing device 102. Thus, printing device 102 may not be able to initiate communication with devices assigned to the secure network 110, such as compliant computer 112. Instead, the printing device 102 may be relegated to initiating communication with the non-compliant computer 114 or a remediation server assigned to the restricted network 108.

In step 216, the printing device 102 contacts a remediation server, such as status server 104. When contacting the remediation server, the printing device 102 may be provided firewall settings, firmware or software updates, virus definition files, or other means of remediation for the non-compliant criteria of the health policy 128. At some point in time, the printing device 102 performs step 204 of transmitting new operational health information to the compliance server 106. This allows the printing device 102 to reattempt access to secure network 110 when the operational health information 118 changes.

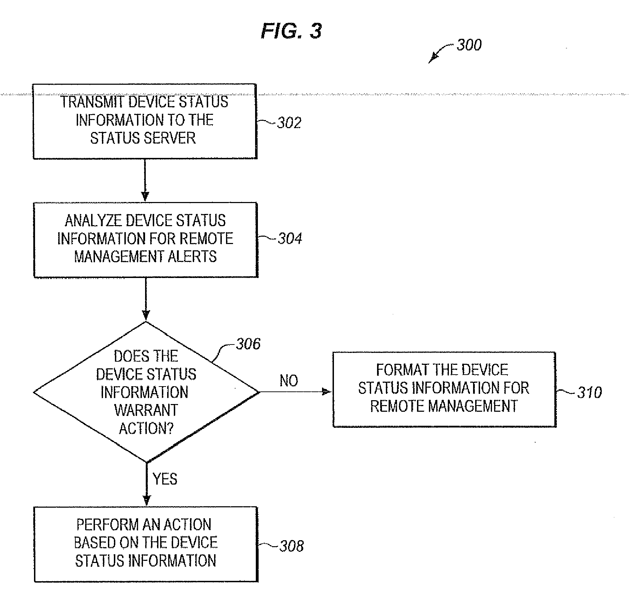

FIG. 3 is a flowchart depicting an exemplary method 300 for providing remote management of printing devices within secure health policy based networks.

In step 302, the printing device 102 transmits a device status information 120 to the status server 104. The device status information 120 may include information about the printing device 120, such as page count information, firmware version information, toner status, ink status, etc.

In step 304, the status server 104 analyzes the device status information 120 for remote management alerts. The remote management server 104 may compare the device status information 120 with various thresholds for action, such as a remaining amount of toner or ink, page count information which indicates a high frequency of paper jams, and the like.

In step 306, the status server 104 determines if the device status information 120 warrants some action or alert. If the status server 104 determines that no action or alert is warranted, then step 310 is performed. In step 310, the device status information 120 is formatted for later use by a network administrator for remote management, In this regard, the status server 104 may generate charts or graphs indicating long term trends of the device status information 120. For example, the status server may generate a trending chart for paper jam events. The trending chart may indicate to a network administrator that the number of paper jam events is increasing in frequency over time. This may indicate to the network administrator that a technician should be alerted to perform service on the printing device 102.

Step 308 is performed if the status server 104 determines that an action or alert is warranted. In step 308, the status server 10A may generate an alert signal or condition for a network administrator, such as an email. The status server also may automatically perform functions based on the device status information 120, such as automatically ordering toner or ink supplies, signaling a technician of a repair requirement for the printing device 102, and the like.

In the system and methods of FIGS. 1-3, the health policy 128 may include a number of criteria used by the compliance server 106 in granting access to the secure network 110. One criterion includes an alarm condition. An alarm condition may include a paper jam, that the printing device 102 is out of toner or ink, or some other condition about the printing device 102 which may preclude it from being granted access to the secure network 110.

Another criterion of the health policy 128 may include a security violation at the printing device 102. For example, perhaps the printing device 102 has logged an unusual communication event, such as someone attempting remote access of the printing device 102 from the internet. Other security violation criteria may include unusual or foreign software executing on the printing device 102, perhaps from a remote party attempting to gain access to the secure network 110 through the printing device 102.

Another criterion may include that the printing device is in a maintenance mode. For example, a technician may put the printing device 102 in a maintenance mode for diagnostic purposes. Also, the printing device 102 may be in a maintenance mode during a firmware update.

Another criterion of the health policy 128 may include a firmware revision number of the printing device 102. The firmware revision number may be used to deny the printing device 102 access to the secure network 110. For example, it may be determined that various firmware revisions are not as secure as others. It also may be that the health policy 128 requires that all printing devices, such as printing device 102, may only be granted access to the secure network 110 when using the latest firmware version.

Another criterion of the health policy 128 may include an anti-virus software status of the printing device 102. In some cases, the printing device 102 may operate specific anti-virus software, which may require updating over time. This updating may include new versions of the anti-virus software or new virus definition files used when operation the anti-virus software on the printing device 102.

Another criterion of the health policy 128 may include a firewall status of the printing device 102. In some cases, the printing device 102 may be connected to the internet. For example, the signal path 128 which connects the printing device 102 to the status server 104 may be an internet connection. Thus, the firewall status of the printing device may be a criterion for granting access to the secure network 110. For example, if the firewall is disabled on the printing device 102, access to the secure network 110 may be denied by the compliance server 106.

Another criterion of the health policy 128 may include a busy status of the printing device 102. For example, the printing device 102 may be busy performing a firmware of software update.

In the system and methods of FIGS. 1-3, the device status information 120 of the printing device 102 may include a number of different types of status information for the printing device 102. One such type of status information 120 includes a current page count for the printing device 102. A current page count may include the number of total pages printed, the number of pages printed resulting in a paper jam, the amount of pages remaining in a specific paper tray or cassette, and the like.

Another type of status information 120 includes a toner or ink status of the printing device 102. For example, the toner or ink status may indicate the remaining amount of toner or ink in a cartridge, or the estimated number of pages which may be printed before the cartridge is empty.

The printing and remote management system 100 of FIG. 1 may include any combination of electronic circuits, systems, servers, computers, programmable logic, or processors to perform the functionality recited herein. In addition, the method 200 of FIG. 2 and the method 300 of FIG. 3 may be embodied as programmed instructions executing on the printing device 102 or on the printing and remote management system 100 of FIG. 1, or stored as programmed instructions stored on a computer readable medium.

Although specific embodiments were described herein, the scope of the invention is not limited to those specific embodiments. The scope of the invention is defined by the following claims and any equivalents thereof.

## Claims

1. A method of configuring a printing device (102) to operate within a secure network (110), wherein the secure network includes a compliance server (106), the method comprising:
transmitting device status information of the printing device to a status server (104);
transmitting a health policy from the status server to the compliance server, wherein the health policy includes criteria for determining whether to include the printing device for operation within the secure network;
transmitting operational health information of the printing device to the compliance server;
evaluating the operational health information of the printing device to determine compliance with the health policy; and
configuring the printing device to operate within the secure network responsive to determining that the operational health information of the printing device is in compliance with the health policy.

2. The method of claim 1, wherein the criteria for including the printing device for operation within the secure network is selected from a group consisting essentially of:
an active alarm condition;
a security violation;
a maintenance mode indication;
a firmware revision number;
an anti-virus software status;
a firewall status; and
a busy status.

3. The method of claim 2, wherein evaluating the operational health information of the printing device further comprises:
determining that the operational health information of the printing device is not in compliance with the health policy; and
responsive to determining, preventing transmission of information from the printing device to other devices within the secure network and contacting a remediation server to resolve the criteria of the health policy of which the operational health information is nat in compliance.

4. The method of claim 1, further comprising:
transmitting device discovery information from the compliance server to the status server to indicate a presence of the printing device to the status server.

5. The method of claim 1, further comprising:
transmitting device discovery information from the printing device to the status server to indicate a presence of the printing device to the status server.

6. The method of claim 1, wherein the device status information is selected from a group consisting essentially of:
a current page count;
a current firmware version;
a status of pages printed correctly on the printing device;
a toner status of the printing device; and
an ink status of the printing device.

7. The method of claim 1, wherein the compliance server is a Microsoft Network Access Protection (NAP) health policy server, and
wherein transmitting the operational health information of the printing device comprises transmitting an NAP statement of health.

8. A method operable on a printing device (102) for operating within a secure network (110), wherein the secure network comprises a compliance server (106), the method comprising:
transmitting device status information of the printing device to a status server (104);
transmitting operational health information of the printing device to the compliance server, wherein the operational health information is configured for evaluating the printing device to determine whether to include the printing device for operation within the secure network and wherein the evaluation is based on a health policy generated by the status server for the secure network; and
receiving network configuration information for operating within the secure network in response to the operational health information being in compliance with the health policy for the secure network.

9. The method of claim 8, wherein a criterion of the health policy for including the printing device for operation within the secure network is selected from a group consisting essentially of:
an active alarm condition;
a security violation;
a maintenance mode indication;
a firmware revision number;
an anti-virus software status;
a firewall status; and
a busy status.

10. The method of claim 9, wherein receiving network configuration information further comprises:
receiving network configuration information for operating within a restricted network, wherein operating in the restricted network prevents transmission of information from the printing device to other devices within the secure network; and
contacting a remediation server to resolve the criterion of the health policy in which the operational health information is not compliant.

11. The method of claim 8, further comprising:
transmitting device discovery information to the status server to indicate a presence of the printing device to the status server.

12. The method of claim 8, wherein the device status information is selected from a group consisting essentially of:
a current page count;
a current firmware version;
a status of pages printed correctly on the printing device;
a toner status of the printing device; and
an ink status of the printing device.

13. The method of claim 8,
wherein the compliance server is a Microsoft Network Access Protection (NAP) health policy server and
wherein the operational health information of the printing device comprises an NAP statement of health.

14. A printing system (100) operable within a secure network (110), the printing system comprising:
a printing device (102);
a status server (104) communicatively coupled to the printing device, wherein the status server is operable to receive device status information from the printing device;
a compliance server (106) communicatively coupled to the printing device and the status server, wherein the compliance server is operable to evaluate operational health information of the printing device based on a health policy for the secure network and wherein the health policy includes criteria for determining whether to include the printing device for operation within the secure network,
wherein the printing device is operable to transmit the device status information of the printing device to the status server and to transmit the operational health information of the printing device to the compliance server,
wherein the status server is further operable to transmit the health policy to the compliance server, and
wherein the compliance server is further operable to evaluate the operational health information of the printing device for compliance with the health policy and to configure the printing device to operate within the secure network responsive to determining that the operational health information is in compliance with the health policy.
